(19) Europäisches Patentamt
European Patent Office
Office européen des brevets

(11) **EP 2 824 636 B1**

(12) **EUROPEAN PATENT SPECIFICATION**

(45) Date of publication and mention
of the grant of the patent:
**06.09.2017 Bulletin 2017/36**

(51) Int Cl.:
*G06T 7/00* (2017.01)  *G06K 9/00* (2006.01)

(21) Application number: **13176182.7**

(22) Date of filing: **11.07.2013**

(54) **Method and corresponding system for automatically classifying at least one angiographic video recording of a part of a region comprising a human heart**

Verfahren und entsprechendes System zum automatischen Einstufen mindestens einer angiografischen Videoaufzeichnung eines Teils eines Bereichs, die ein menschliches Herz enthält

Procédé et système correspondant pour classer automatiquement au moins un enregistrement vidéo angiographique d'une partie d'une région comprenant un coeur humain

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.01.2015 Bulletin 2015/03**

(73) Proprietor: **General Electric Company Schenectady, NY 12345 (US)**

(72) Inventors:
• **Dekel, Shai**
  **78533 Buc Cedex (FR)**
• **Google, Leon**
  **78533 Buc Cedex (FR)**
• **Kuper, Asher**
  **78533 Buc Cedex (FR)**

(74) Representative: **Delprat, Olivier Casalonga & Partners Bayerstrasse 71/73 80335 München (DE)**

(56) References cited:
**US-A- 5 533 085**

• **SYEDA-MAHMOOD T ET AL: "Automatic Selection of Keyframes from Angiogram Videos", PATTERN RECOGNITION (ICPR), 2010 20TH INTERNATIONAL CONFERENCE ON, IEEE, PISCATAWAY, NJ, USA, 23 August 2010 (2010-08-23), pages 4008-4011, XP031772619, ISBN: 978-1-4244-7542-1**
• **Fei Wang ET AL: "Pyramid Histograms of Motion Context with Application to Angiogram Video Classification" In: "Field Programmable Logic and Application", 1 January 2011 (2011-01-01), Springer Berlin Heidelberg, Berlin, Heidelberg, XP055087334, ISSN: 0302-9743 ISBN: 978-3-54-045234-8 vol. 6666, pages 384-391, DOI: 10.1007/978-3-642-21028-0_49, * the whole document ***

**Description**

The invention relates, in general, to medical imaging and more precisely to angiographic video recordings.

More specifically, the invention relates to angiographic video recordings of the human heart and/or its surroundings.

Among the major examination regions are the left coronary artery, the right coronary artery and the left ventricle. These regions are observed with the aim of discovering abnormalities such as stenosis, or even observing interventions to treat these abnormalities. Known interventions include the insertion and expansion of a balloon or the implantation of a stent device.

In order to observe vessels and organs such as coronary arteries and heart ventricles, it has been proposed to inject a liquid able to block X-rays before performing an X-ray observation. Such a liquid is usually called a contrast agent and this procedure is better known to the skilled artisan as an angiography. It has also been proposed to record videos of angiographies. Such videos can record mere observations or even the introduction of a device such as a balloon or a stent.

Usually, before performing an angiography, the physicians have to review previously recorded data. A large number of files can be stored for a single patient, including diagnostic recordings, intervention recordings, and recordings of different parts or vessels. Furthermore, the files used to store these video recordings (or "cine-loops") are usually not labelled per vessel type, nor do they mention the existence of an abnormality or of a device. The physician or user is therefore compelled to go through all the files and to visualize them in order to retrieve relevant information.

A commonly used standard for the video recordings or cine-loops is the "DICOM" standard. Angiographic video recording are usually stored in the "XA" file format according to this standard. This file format usually does not include labels relating to the type of recording.

The aim of the invention is to facilitate the viewing of video recordings by a user or a physician, and to facilitate the search for a specific video recording.

According to one method of implementation and embodiment, angiographic video recordings are automatically classified.

According to one aspect, a method is provided for automatically classifying at least one angiographic video recording of a part of a region comprising a human heart, said at least one video recording comprising a plurality of frames.

The method comprises:

- determining the total variation norm for each frame of said at least one video recording,
- determining a group of frames for which the total variation norm is higher than a first threshold,
- determining the standard deviation of the total variation norm for the group of frames, and
- comparing the standard deviation and a second threshold,

the at least one video recording being a video recording of the left ventricle if the standard deviation is higher than the second threshold or a recording of either the left coronary artery or the right coronary artery if the standard deviation is lower than the second threshold.

The video recordings can be cine-loops of the XA type. Such files can therefore be automatically classified in at least two categories, the first one comprising video recordings of the left ventricle, and the second one comprising video recordings of both the left and the right coronary artery.

The first threshold can be chosen in order to only select values for which the contrast is high. This threshold can also be chosen by determining the maximal total variation norm value and by selecting all the values within a certain range from this maximal value (and thus selecting a threshold). The group of frames comprises the frames in which the contrast agent has spread in the observed region because such frames have more significant edges.

The second threshold can be chosen according to a prior calibration step. The standard deviation for a video recording of the left ventricle is usually much higher than the standard deviation for a video recording of the left or right coronary artery.

A plurality of video recordings can also be processed by this method in order to classify them into the at least two categories.

The method can also comprise a smoothing of the total variation norm of the at least one video recording prior to the determination of the standard deviation. This smoothing reduces the noise and allows carrying on the calculation with less data. Other treatments may also be applied such as a resizing and a deletion of the first few frames of the video recording.

The at least one video recording can comprise additional information relating to the position of a X-ray tube used for the angiographic video recording, and the method can further comprise reading said additional information.

An XA file can contain such data. Usually, the position of a X-ray tube is defined by two angular values which define the orientation of an X-ray tube with respect to the table on which a patient is lying. It is therefore possible to form another category or a category of smaller rank comprising the angiographic video recording made from a same position of X-ray tube.

If the at least one video recording is a recording of either the left coronary artery or the right coronary artery, the method can comprise a calculation of two values relating to invariant elements of a frame of the video recording, preferably a frame from the group of frame for which the total variation is higher than the first threshold, the two values being compared to calibration data in order to determine whether the at least one video recording is a recording of the left coronary artery or the right coronary artery.

Thus, an automatic differentiation between the two types of coronary artery is obtained. The method of geometric invariant can be applied to the frame. Such a method has been described in the document "Visual pattern recognition by moment invariants" by Hu published in "IRE Trans Inf Theory, pages 179-187, 1962" and in the document "Real Object recognition using moment invariants" by Mercimek, Gulez and Mumcu published in "Sadhana, volume 30, pages 765-775, 2005".

The invariants can be calculated using two dimensional moments. More precisely, the two values can be the first and fourth invariants of the frame. These values can then be compared to calibration data obtained prior to this step in order to confirm that the two values are closer to usual values.

The method can comprise, prior to the calculation of the two values, a segmenting of said frame to detect vessels. An image comprising only vessels can thus be obtained, which facilitates the calculation of the invariants.

The method can also comprise, if the at least one video is a video of said right or left coronary artery, an additional image processing step on at least a frame of said at least one video recording in order to determine the type of vessel appearing on said frame.

For example, for a right coronary artery, it is possible to automatically detect if the angiographic video recording, or cine-loop, is a recording of the acute marginal branch or the post descending artery. For a left coronary artery, it is possible to determine if the video recording is a recording of the left anterior descending artery, the left circumflex branch, a marginal branch or a diagonal branch.

The method can further comprise a detection of a diastole and/or of a systole in said video recording, and the placement of markers at said diastole and/or systole in the video recording. These markers can facilitate navigation in the video recording.

The method can also comprise displaying a representation of a region comprising a human heart on controllable display means, highlighting an area of the representation corresponding to the at least one video recording, displaying a list of video recordings corresponding to the area comprising the at least one video recording when a user selects the area, playing the at least one video recording when said user selects the at least one video recording.

This displaying allows saving time for a user. The displaying and the highlighting of different areas replace the need to go through all the video recordings for one patient.

According to another aspect, a system is provided for automatically classifying at least one angiographic video recording of a part of a region comprising a human heart, said at least one video recording comprising a plurality of frames.

The system comprises a computation unit comprising means for determining the total variation norm for each frame of said at least one video recording, means for determining a group of frames for which the total variation norm is higher than a first threshold, means for determining the standard deviation of the total variation norm for the group of frames, and means for comparing the standard deviation and a second threshold, the at least one video recording being a video recording of the left ventricle if the standard deviation is higher than the second threshold or a recording of either the left coronary artery or the right coronary artery if the standard deviation is lower than the second threshold.

The system can comprise means for smoothing the total variation norm of the at least one video recording.

The at least one video recording can comprise additional information relating to the position of a X-ray tube used for the angiographic video recording, the system further comprising means for reading said additional information.

The system can comprise means for calculating two values relating to invariant elements of a frame of the video recording and means for comparing the two values to calibration data.

The system can comprise means for segmenting said frame able to detect vessels.

The system can comprise means for detecting on a frame of the at least one video recording a device comprised in said part of a human heart, said device being chosen in the group formed by stents, balloons and wires.

The system can further comprise additional means for processing at least a frame of said at least one video recording in order to determine the type of vessel appearing on said frame.

The system can comprise means for detecting a diastole and/or a systole in said video recording, and means for placing markers at said diastole and/or systole in the video recording.

The system can also comprise controllable display means able to represent a region comprising a human heart, means for highlighting an area of the representation corresponding to the at least one video recording, means for displaying a list of video recordings corresponding to the area comprising the at least one video recording and video playing means for playing the at least one video recording when a user selects the at least one video recording.

Other objects, features and advantages of the invention will appear on reading the following description given only as a nonlimiting example and made with reference to the appended drawings in which:

- figure 1 illustrates a decision tree according to an aspect of the invention;
- figure 2 illustrates the right and left coronary artery;
- figure 3 illustrates the different steps for calculating the total variation;
- figure 4 illustrates the determination of the contrast agent area;
- figures 5a, 5b and 5c illustrate the total variation for different parts;
- figure 6 illustrates the result of a vessel segmentation;
- figure 7 illustrates two different clusters of invariants;
- figure 8 illustrates schematically a vessel comprising a device;
- figure 9 illustrates schematically an interface for displaying video recordings; and
- figure 10 illustrates schematically a system according to an aspect of the invention.

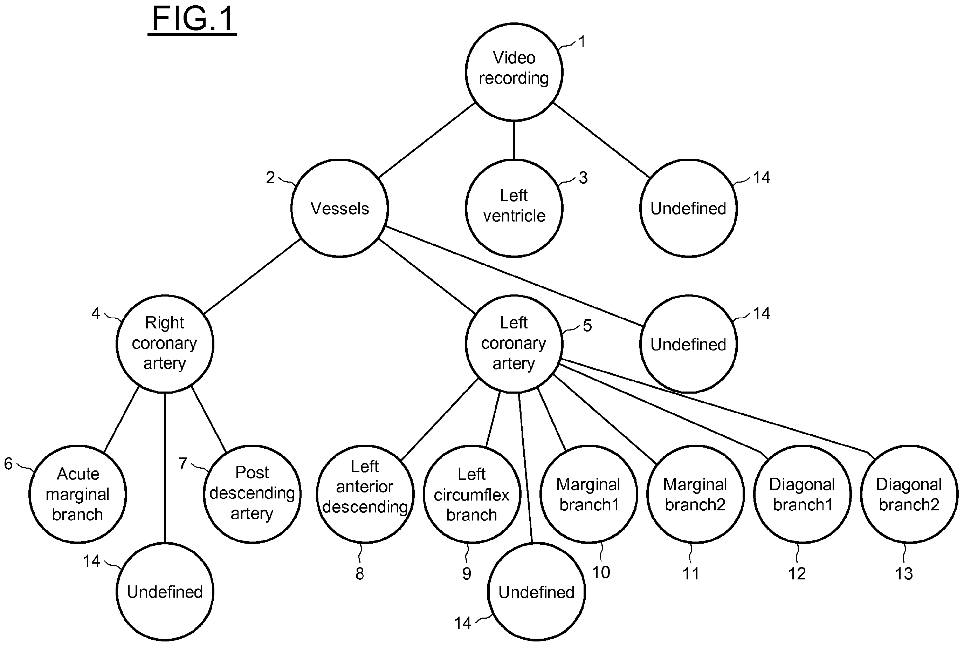

A decision tree is represented on figure 1. This decision tree illustrates the different classifications into which a video recording 1 can be classified according to an aspect of the invention. The video recording 1 can either be a recording of vessels 2 surrounding a human heart or a recording of the left ventricle. If the recording is a video recording of vessels, it can either be of the right coronary artery 4 or the left coronary artery 5. Further, a method according to an aspect of the invention can determine whether the recording of the right coronary artery is a recording of the acute marginal branch 6 or the post descending artery 7. As concerns recording of the left coronary artery 5, they can be classified as recordings of the left anterior descending branch 8, the left circumflex branch 9, the first marginal branch 10, the second marginal branch 11, the first diagonal branch 12 or the second diagonal branch 13.

Each classifying step may also lead to an undefined 14 type of vessel or video recording or to other types of vessels not illustrated on figure 1.

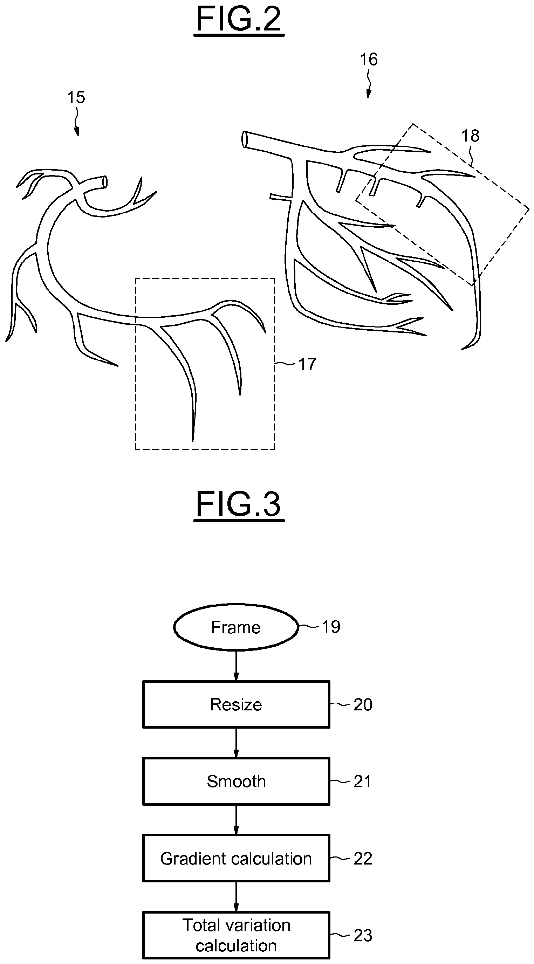

A schematic representation of the right coronary artery 15 and the left coronary artery 16 is represented on figure 2. In order to observe area 17 (that comprises the posterior descending artery and the posterior left ventricle branch), an angiographic recording is done with a specific orientation. Two angles usually define this orientation, the first angle is known as the rotation and corresponds to the orientation of the X-ray tube around the longitudinal axis of a patient, the second angle is known as the angulation and corresponds to the position of the X-ray tube around the short axis of the patient. 30° of rotation and 20° of angulation allows observing of area 17. These two values are usually stored in the video recording files and are of interest for the user. For example, area 18 can be observed with several positions 30° of rotation and 30° of angulation.

Figure 3 illustrates the different steps for calculating the total variation of a frame 19 of a video recording. Theses steps can be implemented by a computation unit such as a computer comprising a microprocessor or any other type of computer. These steps can also be implemented on all the frames of a video recording. Frame 19 is usually a greyscale picture comprising a finite number of pixels.

The frame 19 is resized in step 20, for example its resolution is divided by two. This allows using less data for subsequent computations. A smoothing is then done (step 21), for example a smoothing known by the man skilled in the art as an anisotropic diffusion or a Gaussian filter. The gradient of each pixel of frame 19 is then calculated (step 22). This gradient is then used in an integral equation on the whole frame in order to determine the total variation norm (step 23). A discrete value is thus obtained after step 23. It is possible to calculate this total variation for each frame of a video recording. It is also preferable to remove the first ten frames of a video recording (during which the contrast agent has not spread) before computing the total variation for each frame.

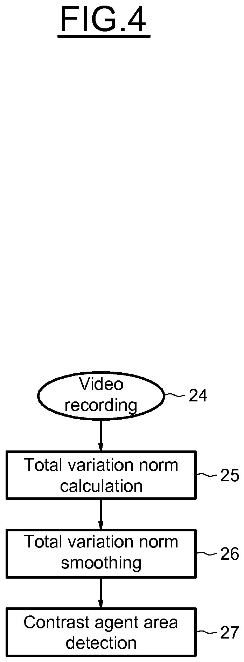

Figure 4 illustrates the detection of the contrast agent area, the area in which the contrast agent is spread into the observed vessels at a high enough concentration. The steps illustrated on figure 4 can also be implemented by a computation unit such as a computer.

The total variation norm of each frame (except the first ten frames) of a video recording 24 is calculated (step 25), for example through the implementation of steps 20, 21, 22, 23 described with reference to figure 2. A smoothing can then be realised on the total variation of each frame (step 26), such a Gaussian filter. The contrast agent area can then be detected (step 27) by determining the maximum value of the smoothed total variation norm and selecting all values within a certain percentage from it. These values are above a selected threshold.

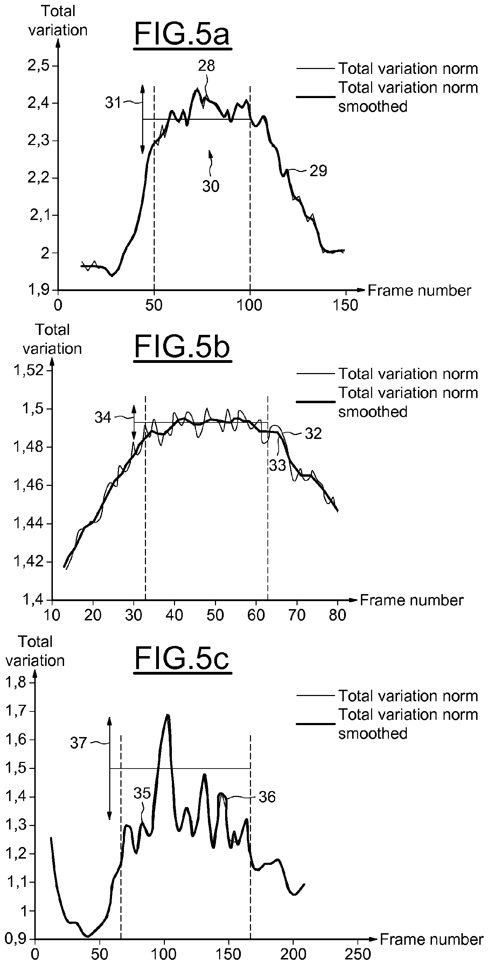

Figure 5a illustrates the total variation norm of a video recording of the left coronary artery. Curve 28 on figure 5a illustrates the total variation norm with a thin line and curve 29 illustrates the smoothed total variation. The contrast agent segment 30 is delimited by dashed lines. For the values of smoothed total variation norm comprised in the contrast agent segment, a standard deviation can be computed (illustrated by arrow 31). In this example, the standard deviation can be equal to 0.03.

Figure 5b illustrates the total variation norm of a video recording of the right coronary artery (32, 33). In this example, the standard deviation illustrated by arrow 34 can be equal to 0.003.

Figure 5c illustrates the total variation norm of a video recording of the left ventricle of a human heart (35, 36).

In this example, the standard deviation illustrated by arrow 37 can be equal to 0.11.

The standard deviation for the left ventricle is much higher than the ones of the right and left coronary artery. A threshold can thus be chosen, for example a value between 0.03 and 0.11, in order to determine whether the video recording is a video recording of the left ventricle or of vessels such as the right or left coronary artery.

In order to determine the type of vessels (right or left coronary artery), a frame 38 of a video recording can be processed. A segmentation can be applied on frame 38 in order to obtain a high contrast between the areas corresponding to vessels 39 and other areas. A group of two invariants can then be calculated for frame 39. The following equations can be used, with $m_{pq}$ being a two dimensional moment, $f(x,y)$ an image of dimensions M times N :

$$m_{pq} = \sum_{x=0}^{M-1}\sum_{y=0}^{N-1} x^p y^q \cdot f(x,y)$$

$$\mu_{pq} = \sum_{x=0}^{M-1}\sum_{y=0}^{N-1} (x - \bar{x})^p (y - \bar{y})^q$$

with $\bar{x} = \dfrac{m_{10}}{m_{00}}, \bar{y} = \dfrac{m_{01}}{m_{00}}$ and $\mu_{pp}$ being a central moment,

$$\eta_{pq} = \mu_{pq} / \mu_{00}^{\gamma}$$

wherein $\gamma = \dfrac{p+q}{2} + 1$

The first and fourth invariants $M_1$ and $M_4$ can then be calculated:

$$M_1 = (\eta_{20} + \eta_{02})$$

$$M_4 = (\eta_{30} + 3\eta_{12})^2 + (\eta_{21} + \eta_{03})^2$$

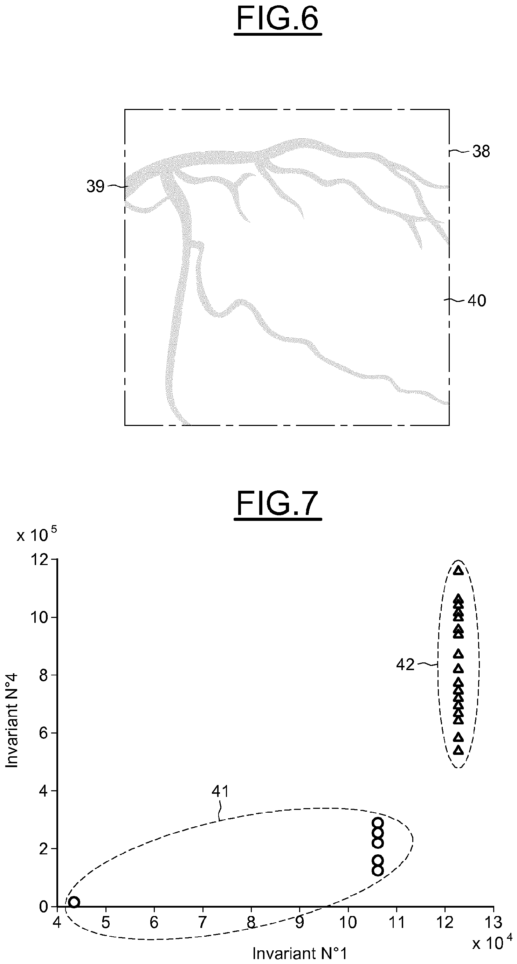

As illustrated on figure 7, the first and fourth invariants can be plotted for a large number of frames. A preceding calibration step can be implemented in order to obtain these values.

The values corresponding to right coronary arteries are represented by circles and form a cluster of points 41 on figure 7. The values corresponding to left coronary arteries are represented by triangles and form a cluster of points 42 on figure 7. As can be observed on figure 7, the two clusters 41 and 42 are noticeably separated. It is therefore possible to determine, through a graphical method, whether a recording is a recording of the left or right coronary artery. The two invariants can also be compared to two threshold values determined graphically in order to classify the video recording.

An additional processing step can also be applied to frame 38 of figure 6 in order to determine a more specific type of vessel, as disclosed on figure 1.

According to an aspect of the invention, it is possible to determine automatically if a device is implanted in a vessel, or the type of observation. A wire, a stent or a balloon can be implanted in a vessel. Further, it is possible to determine at which stage the device is being observed.

In order to determine if a wire is present, a frame of a video recording can be processed. A first step can be an adaptive filtering (such as an anisotropic diffusion) in order to remove the noise from said frame. This treatment allows keeping sharp edges around wires with a smoothed background. A median filtering can then be applied on said frame, and a vessel segmentation in order to obtain an image containing only wires to facilitate an automatic detection of wires.

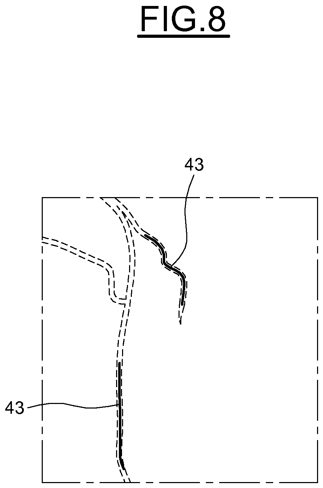

Figure 8 represents schematically a frame of a video recording after such processing steps. On figure 8, two wires 43 can be detected on the frame. The outline of the vessels containing the wires 43 is represented in dashed lines, even though this outline has been erased by the segmentation step.

Stents and balloons can be detected using similar approaches. Stents have a cylindrical shape with two darker points at the end of the cylindrical shape. Balloons have a thick cylindrical shape with a uniform intensity.

After the vessel segmentation step or after other processing steps, a filter having the shape of the object to detect may also be superimposed on the frame to automatically detect the object or device. An example of automatic detection can be realised with the following equations in which I(x) is a frame of dimensions N times M with x = (x$_1$, x$_2$), T(x-z) = T$_x$(z) is the filter (or template) corresponding to the object to detect, T is a convolution kernel and it is a two dimensional object such as the two dimensional transposition of a cylinder and z = (z$_1$, z$_2$), and θ is a rotational angle (corresponding to the orientation of a cylinder):

$$T_{\theta,x} = T_x(z_1\cos\theta - z_2\sin\theta, z_{,1}\sin\theta + z_2\cos\theta)$$

$$L(\theta_n, x) = \left|\left\langle I(z), T_{\theta_n,x}(z)\right\rangle\right|, \theta_n = \frac{\pi n}{N}$$

with $T_{\theta,x}$ being an oriented filter and $L(\theta_n,x)$ the filtered image

The filtered image can then be compared to a threshold for each location x=(x$_1$,x$_2$) and at an angle θ$_n$ in order to determine if a cylindrical object is present.

Once classified, the video recordings can be displayed in a more practical way than a list of video recordings. This displaying can be realised on display means such as a computer screen or a tablet or any other controllable display means. Advantageously, the display means are connected to the computation means that classified the video recordings.

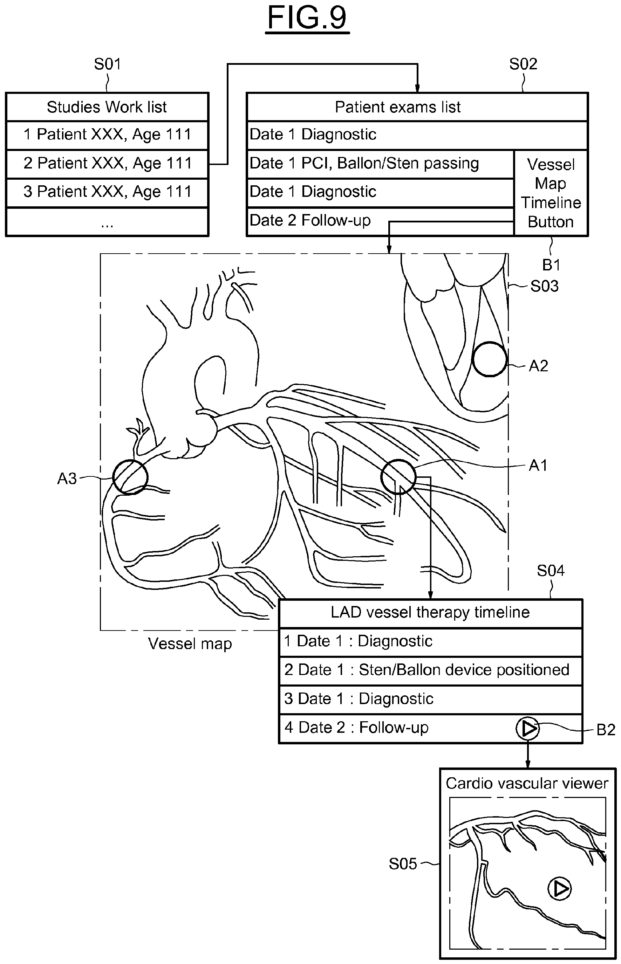

Figure 9 illustrates schematically a computer interface for displaying video recordings. On a first screen S01, a list of patients can be displayed. This list can comprise the names and age of patients as well as any other information.

Once a patient is selected, for example by clicking on its name with a computer mouse to be used with the controllable display means, a second screen S02 appears that comprises a list of video recordings. For each video recording, each element of said list can comprise text corresponding to data directly read in the files such as the date, and additional data determined according to an aspect of the invention. This list is more practical for a user than a list comprising only data read directly in the files, as it allows a user to save time.

An additional button B1 can be displayed close to the list. When pressed or clicked, a third screen S03 can be displayed, comprising a schematic representation of a human heart and its surroundings.

Several areas (A1, A2, A3) of the third screen S03 can be highlighted if for the selected patient, there exist video recording that have been determined for the type of vessel they contain.

When selecting the area A3 (corresponding to the left anterior descending branch has been selected), a fourth screen S04 can be displayed, comprising the list of video recording that have been automatically classified as video recordings of the left anterior descending branch. The list can also comprise additional information.

An additional button B2 can be displayed on the list, that launches a fifth screen S05 in which the video recording or cine loop is played.

Screen S05 can also contain markers, or key frames, in order to navigate through the video recording directly to specific events such as a diastole or a systole.

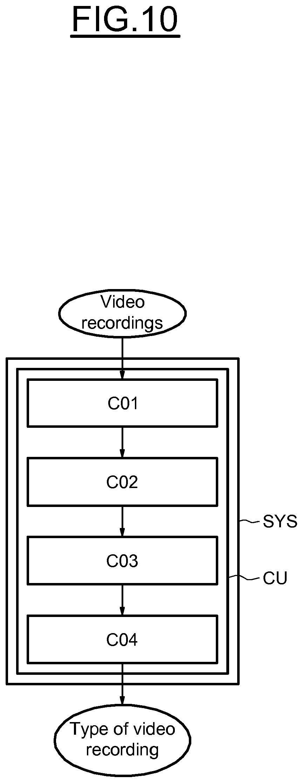

On figure 10, a system SYS for classifying video recordings is represented. The system SYS comprises a computation unit CU. The computation unit CU can be a computer, a laptop or any device comprising a microprocessor able to run software. The computation unit comprises calculators for determining the total variation norm for each frame of a video recording (C01), for determining a group of frames for which the total variation norm is higher than a first threshold (C02), for determining the standard deviation of the total variation norm for the group of frames (C03), and for comparing the standard deviation and a second threshold in order to determine the type of video recording.

According to an aspect of the invention, time is saved in order to retrieve a video recording that a user is looking for.

According to another aspect, the displaying allows for a simpler approach to select a video recording or cine-loop to be played than a list of video recordings with no additional data.

It will be noted that the invention relates in general and according to an aspect to a system for automatically classifying at least one angiographic video recording of a part of a region comprising a human heart, said at least one video recording comprising a plurality of frames, for example stored on a digital storage device such as a hard drive, the system comprising a computation unit, able to perform calculations such as a computer, a laptop, a device comprising a microprocessor and able to run software or any other suitable devices. The computation unit is able to determine through a computation the total variation norm for each frame of said at least one video recording, the computation unit is also able to determine a group of frames for which the total variation norm is higher than a first threshold, the computation unit is able to determine the standard deviation of the total variation norm for the group of frames, and the computation unit is able to compare the standard deviation and a second threshold, the at least one video recording being a video recording of the left ventricle if the standard deviation is higher than the second threshold or a recording of either the left coronary artery or the right coronary artery if the standard deviation is lower than the second threshold.

**Claims**

1. Method for automatically classifying at least one angiographic video recording (24) of a part of a region comprising a human heart, said at least one video recording comprising a plurality of frames, **characterized in that** it comprises:

   - determining the total variation norm for each frame of said at least one video recording (25),
   - determining a group of frames for which the total variation norm is higher than a first threshold (27),
   - determining the standard deviation (31, 34, 37) of the total variation norm for the group of frames, and
   - comparing the standard deviation and a second threshold,

   the at least one video recording being a video recording of the left ventricle if the standard deviation is higher than the second threshold or a recording of either the left coronary artery or the right coronary artery if the standard deviation is lower than the second threshold.

2. Method according to claim 1, further comprising a smoothing (26) of the total variation norm of the at least one video recording prior to the determination of the standard deviation.

3. Method according to claim 1 or 2, wherein the at least one video recording comprises additional information relating to the position of a X-ray tube used for the angiographic video recording, the method further comprising reading said additional information.

4. Method according to any one of the preceding claims, wherein if the at least one video recording is a recording of either the left coronary artery or the right coronary artery, the method further comprising a calculation of two values ($M_1$, $M_4$) relating to invariant elements of a frame (38) of the video recording, the two values being compared to calibration data in order to determine whether the at least one video recording is a recording of the left coronary artery or the right coronary artery.

5. Method according to claim 4, comprising prior to the calculation of the two values a segmenting of said frame to detect vessels.

6. Method according to any one of the preceding claims, comprising a detection of a device comprised in said part, said device being chosen in the group formed by stents, balloons and wires, and the detection being made through image processing of a frame of the at least one video recording.

7. Method according to claim 6, comprising, if the at least one video recording is a recording of either the left coronary artery or the right coronary artery, an additional image processing step on at least a frame of said at least one video recording in order to determine the type of vessel appearing on said frame.

8. Method according to any one of the preceding claims, comprising a detection of a diastole and/or of a systole in said video recording, and the placement of markers at said diastole and/or systole in the video recording.

9. Method according to any one of the preceding claims, comprising displaying a representation of a region comprising a human heart (S03) on controllable display means, highlighting an area (A1, A2, A3) of the representation corresponding to the at least one video recording, displaying a list of video recordings corresponding to the area (S04) comprising the at least one video recording when a user selects the area, playing the at least one video recording (S05) when said user selects the at least one video recording.

10. System for automatically classifying at least one angiographic video recording (24) of a part of a region comprising a human heart, said at least one video recording comprising a plurality of frames, **characterized in that** it comprises a computation unit comprising means for determining the total variation norm for each frame of said at least one video recording (25), means for determining a group of frames for which the total variation norm is higher than a first threshold (27), means for determining the standard deviation (31, 34, 37) of the total variation norm for the group of frames, and means for comparing the standard deviation and a second threshold, the at least one video recording being a video recording of the left ventricle if the standard deviation is higher than the second threshold or a recording of either the left coronary artery or the right coronary artery if the standard deviation is lower than the second threshold.

**11.** System according to claim 10, comprising means for smoothing (26) the total variation norm of the at least one video recording.

**12.** System according to claim 10 or 11, wherein the at least one video recording comprises additional information relating to the position of a X-ray tube used for the angiographic video recording, the system further comprising means for reading said additional information.

**13.** System according to any one of claims 10 to 12, comprising means for calculating two values (M1, M4) relating to invariant elements of a frame (38) of the video recording and means for comparing the two values to calibration data.

**14.** System according to claim 13, comprising means for segmenting said frame able to detect vessels.

**15.** System according to any one of claims 10 to 14, comprising means for detecting on a frame of the at least one video recording a device comprised in said part of a human heart, said device being chosen in the group formed by stents, balloons and wires.

**16.** System according to claim 15, comprising additional means for processing at least a frame of said at least one video recording in order to determine the type of vessel appearing on said frame.

**17.** System according to any one of claims 10 to 16, comprising means for detecting a diastole and/or a systole in said video recording, and means for placing markers at said diastole and/or systole in the video recording.

**18.** System according to any one of claims 10 to 17, comprising controllable display means able to represent a region comprising a human heart (S03), means for highlighting an area (A1, A2, A3) of the representation corresponding to the at least one video recording, means for displaying a list of video recordings corresponding to the area (S04) comprising the at least one video recording and video playing means for playing the at least one video recording (S05) when a user selects the at least one video recording.


**Patentansprüche**

**1.** Verfahren zum automatischen Einstufen mindestens einer angiografischen Videoaufzeichnung (24) eines Teils eines Bereichs, der ein menschliches Herz enthält, wobei die mindestens eine Videoaufzeichnung eine Mehrzahl von Einzelbildern aufweist, **dadurch gekennzeichnet, dass** das Verfahren aufweist:

- das Bestimmen der Total-Variations-Norm für jedes Einzelbild der mindestens einen Videoaufzeichnung (25),
- das Bestimmen einer Gruppe von Einzelbildern, für die die Total-Variations-Norm größer ist als ein erster Schwellenwert (27),
- das Bestimmen der Standardabweichung (31, 34, 37) der Total-Variations-Norm für die Gruppe von Einzelbildern und
- das Vergleichen der Standardabweichung mit einem zweiten Schwellenwert, wobei die mindestens eine Videoaufzeichnung eine Videoaufzeichnung des linken Ventrikels ist, falls die Standardabweichung größer als der zweite Schwellenwert ist, oder eine Aufzeichnung entweder der linken Koronararterie oder der rechten Koronararterie ist, falls die Standardabweichung kleiner als der zweite Schwellenwert ist.

**2.** Verfahren nach Anspruch 1, ferner aufweisend ein Glätten (26) der Total-Variations-Norm der mindestens einen Videoaufzeichnung vor dem Bestimmen der Standardabweichung.

**3.** Verfahren nach Anspruch 1 oder 2, wobei die mindestens eine Videoaufzeichnung zusätzliche Informationen aufweist, die sich auf die Position einer Röntgenröhre, die für die angiografische Videoaufzeichnung verwendet wird, beziehen, wobei das Verfahren ferner das Lesen der zusätzlichen Informationen aufweist.

**4.** Verfahren nach einem der vorhergehenden Ansprüche, wobei, falls die mindestens eine Videoaufzeichnung eine Aufzeichnung entweder der linken Koronararterie oder der rechten Koronararterie ist, das Verfahren ferner eine Berechnung von zwei Werten ($M_1$, $M_4$), die sich auf unveränderliche Elemente eines Einzelbilds (38) der Videoaufzeichnung beziehen, aufweist, wobei die zwei Werte mit Kalibrierungsdaten verglichen werden, um zu bestimmen, ob die mindestens eine Videoaufzeichnung eine Aufzeichnung der linken Koronararterie oder der rechten Koronararterie ist.

5. Verfahren nach Anspruch 4, das vor dem Berechnen der zwei Werte eine Segmentierung des Einzelbilds zum Auffinden von Gefäßen aufweist.

6. Verfahren nach einem der vorhergehenden Ansprüche, aufweisend ein Auffinden einer in diesem Teil beinhalteten Vorrichtung, wobei die Vorrichtung in der Gruppe gewählt wird, die aus Stents, Ballons und Drähten gebildet wird, und wobei das Auffinden mittels Bildverarbeitung eines Einzelbilds der mindestens einen Videoaufzeichnung erfolgt.

7. Verfahren nach Anspruch 6, aufweisend, falls die mindestens eine Videoaufzeichnung eine Aufzeichnung entweder der linken Koronararterie oder der rechten Koronararterie ist, einen zusätzlichen Bildverarbeitungsschritt an mindestens einem Einzelbild der mindestens einen Videoaufzeichnung, um die Art des auf dem Einzelbild erscheinenden Gefäßes zu bestimmen.

8. Verfahren nach einem der vorhergehenden Ansprüche, aufweisend ein Auffinden einer Diastole und/oder einer Systole in der Videoaufzeichnung und das Platzieren von Markierungen bei der Diastole und/oder der Systole in der Videoaufzeichnung.

9. Verfahren nach einem der vorhergehenden Ansprüche, aufweisend das Anzeigen einer Darstellung eines Bereichs, der ein menschliches Herz enthält, (S03) auf einer steuerbaren Anzeigeeinrichtung, das Markieren einer Region (A1, A2, A3) der Darstellung entsprechend der mindestens einen Videoaufzeichnung, das Anzeigen einer Liste von Videoaufzeichnungen entsprechend der Region (S04), die mindestens eine Videoaufzeichnung aufweisend, wenn ein Benutzer die Region auswählt, das Wiedergeben der mindestens einen Videoaufzeichnung (S05), wenn der Benutzer die mindestens eine Videoaufzeichnung auswählt.

10. System zum automatischen Einstufen mindestens einer angiografischen Videoaufzeichnung (24) eines Teils eines Bereichs, der ein menschliches Herz enthält, wobei die mindestens eine Videoaufzeichnung eine Mehrzahl von Einzelbildern aufweist, **dadurch gekennzeichnet, dass** das System eine Berechnungseinheit aufweist, die eine Einrichtung zum Bestimmen der Total-Variations-Norm für jedes Einzelbild der mindestens einen Videoaufzeichnung (25), eine Einrichtung zum Bestimmen einer Gruppe von Einzelbildern, für die die Total-Variations-Norm größer ist als ein erster Schwellenwert (27), eine Einrichtung zum Bestimmen der Standardabweichung (31, 34, 37) der Total-Variations-Norm für die Gruppe von Einzelbildern und eine Einrichtung zum Vergleichen der Standardabweichung mit einem zweiten Schwellenwert aufweist, wobei die mindestens eine Videoaufzeichnung eine Videoaufzeichnung des linken Ventrikels ist, falls die Standardabweichung größer als der zweite Schwellenwert ist, oder eine Aufzeichnung entweder der linken Koronararterie oder der rechten Koronararterie ist, falls die Standardabweichung kleiner als der zweite Schwellenwert ist.

11. System nach Anspruch 10, aufweisend eine Einrichtung zum Glätten (26) der Total-Variations-Norm der mindestens einen Videoaufzeichnung.

12. System nach Anspruch 10 oder 11, wobei die mindestens eine Videoaufzeichnung zusätzliche Informationen aufweist, die sich auf die Position einer Röntgenröhre, die für die angiografische Videoaufzeichnung verwendet wird, beziehen, wobei das System ferner eine Einrichtung zum Lesen der zusätzlichen Informationen aufweist.

13. System nach einem der Ansprüche 10 bis 12, das eine Einrichtung zum Berechnen von zwei Werten ($M_1$, $M_4$), die sich auf unveränderliche Elemente eines Einzelbilds (38) der Videoaufzeichnung beziehen, und eine Einrichtung zum Vergleichen der zwei Werte mit Kalibrierungsdaten aufweist.

14. System nach Anspruch 13, das eine Einrichtung zum Segmentieren des Einzelbilds aufweist, dazu in der Lage, Gefäße aufzufinden.

15. System nach einem der Ansprüche 10 bis 14, aufweisend eine Einrichtung zum Auffinden auf einem Einzelbild der mindestens einen Videoaufzeichnung einer in dem Teil eines menschlichen Herzens beinhalteten Vorrichtung, wobei die Vorrichtung in der Gruppe gewählt wird, die aus Stents, Ballons und Drähten gebildet wird.

16. System nach Anspruch 15, aufweisend eine zusätzliche Einrichtung zum Verarbeiten mindestens eines Einzelbilds der mindestens einen Videoaufzeichnung, um die Art des auf dem Einzelbild erscheinenden Gefäßes zu bestimmen.

**17.** System nach einem der Ansprüche 10 bis 16, das eine Einrichtung zum Auffinden einer Diastole und/oder einer Systole in der Videoaufzeichnung und eine Einrichtung zum Platzieren von Markierungen bei der Diastole und/oder der Systole in der Videoaufzeichnung aufweist.

**18.** System nach einem der Ansprüche 10 bis 17, aufweisend eine steuerbare Anzeigeeinrichtung, die imstande ist, einen Bereich darzustellen, der ein menschliches Herz enthält, (S03), eine Einrichtung zum Markieren einer Region (A1, A2, A3) der Darstellung entsprechend der mindestens einen Videoaufzeichnung, eine Einrichtung zum Anzeigen einer Liste von Videoaufzeichnungen entsprechend der Region (S04), die die mindestens eine Videoaufzeichnung aufweist, und eine Videowiedergabeeinrichtung zum Wiedergeben der mindestens einen Videoaufzeichnung (S05), wenn ein Benutzer die mindestens eine Videoaufzeichnung auswählt.

**Revendications**

**1.** Procédé pour classer automatiquement au moins un enregistrement vidéo angiographique (24) d'une partie d'une région comprenant un coeur humain, ledit au moins un enregistrement vidéo comprenant une pluralité d'images, **caractérisé en ce qu'**il comprend :

- la détermination de la norme de variation totale pour chaque image dudit au moins un enregistrement vidéo (25),
- la détermination d'un groupe d'images pour lesquelles la norme de variation totale est supérieure à un premier seuil (27),
- la détermination de l'écart type (31, 34, 37) de la norme de variation totale pour le groupe d'images, et
- comparer l'écart type et un deuxième seuil,

ledit au moins un enregistrement vidéo étant un enregistrement vidéo du ventricule gauche si l'écart type est supérieur au deuxième seuil ou un enregistrement de l'artère coronaire gauche ou de l'artère coronaire droite si l'écart type est inférieur au deuxième seuil.

**2.** Procédé selon la revendication 1, comprenant en outre un lissage (26) de la norme de variation totale dudit au moins un enregistrement vidéo avant la détermination de l'écart type.

**3.** Procédé selon la revendication 1 ou 2, dans lequel ledit au moins un enregistrement vidéo comprend une information supplémentaire concernant la position d'un tube à rayons X utilisé pour l'enregistrement vidéo angiographique, le procédé comprenant en outre la lecture de ladite information supplémentaire.

**4.** Procédé selon l'une quelconque des revendications précédentes, dans lequel, si ledit au moins un enregistrement vidéo est un enregistrement de l'artère coronaire gauche ou de l'artère coronaire droite, le procédé comprend en outre un calcul de deux valeurs ($M_1$, $M_4$) concernant les éléments invariants d'une image (38) de l'enregistrement vidéo, les deux valeurs étant comparées à des données d'étalonnage afin de déterminer si ledit au moins un enregistrement vidéo est un enregistrement de l'artère coronaire gauche ou de l'artère coronaire droite.

**5.** Procédé selon la revendication 4, comprenant, avant le calcul des deux valeurs, une segmentation de ladite image pour détecter des vaisseaux.

**6.** Procédé selon l'une quelconque des revendications précédentes, comprenant une détection d'un dispositif compris dans ladite partie, ledit dispositif étant choisi dans le groupe formé par les endoprothèses, les ballonnets et les fils métalliques, et cette détection étant réalisée par traitement d'image d'une image dudit au moins un enregistrement vidéo.

**7.** Procédé selon la revendication 6, comprenant, si ledit au moins un enregistrement vidéo est un enregistrement de l'artère coronaire gauche ou de l'artère coronaire droite, une étape de traitement d'image supplémentaire sur au moins une image dudit au moins un enregistrement vidéo afin de déterminer le type de vaisseau qui apparaît sur ladite image.

**8.** Procédé selon l'une quelconque des revendications précédentes, comprenant une détection d'une diastole et/ou d'une systole dans ledit enregistrement vidéo, et la mise en place de marqueurs à ladite diastole et/ou systole dans l'enregistrement vidéo.

9. Procédé selon l'une quelconque des revendications précédentes, comprenant l'affichage d'une représentation d'une région comprenant un coeur humain (S03) sur un moyen d'affichage réglable, la mise en évidence d'une zone (A1, A2, A3) de la représentation correspondant audit au moins un enregistrement vidéo, l'affichage d'une liste d'enregistrements vidéo correspondant à la zone (S04) comprenant ledit au moins un enregistrement vidéo quand un utilisateur sélectionne la zone, la lecture dudit au moins un enregistrement vidéo (S05) quand ledit utilisateur sélectionne ledit au moins un enregistrement vidéo.

10. Système pour classer automatiquement au moins un enregistrement vidéo angiographique (24) d'une partie d'une région comprenant un coeur humain, ledit au moins un enregistrement vidéo comprenant une pluralité d'images, **caractérisé en ce qu'**il comprend une unité de calcul comprenant un moyen pour déterminer la norme de variation totale pour chaque image dudit au moins un enregistrement vidéo (25), un moyen pour déterminer un groupe d'images pour lesquelles la norme de variation totale est supérieure à un premier seuil (27), un moyen pour déterminer l'écart type (31, 34, 37) de la norme de variation totale pour le groupe d'images, et un moyen pour comparer l'écart type et un deuxième seuil, ledit au moins un enregistrement vidéo étant un enregistrement vidéo du ventricule gauche si l'écart type est supérieur au deuxième seuil ou un enregistrement de l'artère coronaire gauche ou de l'artère coronaire droite si l'écart type est inférieur au deuxième seuil.

11. Système selon la revendication 10, comprenant un moyen pour lisser (26) la norme de variation totale dudit au moins un enregistrement vidéo.

12. Système selon la revendication 10 ou 11, dans lequel ledit au moins un enregistrement vidéo comprend une information supplémentaire concernant la position d'un tube à rayons X utilisé pour l'enregistrement vidéo angiographique, le système comprenant en outre un moyen pour lire ladite information supplémentaire.

13. Système selon l'une quelconque des revendications 10 à 12, comprenant un moyen pour calculer deux valeurs (M1, M4) concernant les éléments invariants d'une image (38) de l'enregistrement vidéo, et un moyen pour comparer les deux valeurs à des données d'étalonnage.

14. Système selon la revendication 13, comprenant un moyen pour segmenter ladite image apte à détecter les vaisseaux.

15. Système selon l'une quelconque des revendications 10 à 14, comprenant un moyen pour détecter sur une image dudit au moins un enregistrement vidéo un dispositif compris dans ladite partie d'un coeur humain, ledit dispositif étant choisi dans le groupe formé par les endoprothèses, les ballonnets et les fils métalliques.

16. Système selon la revendication 15, comprenant un moyen supplémentaire pour traiter au moins une image dudit au moins un enregistrement vidéo afin de déterminer le type de vaisseau qui apparaît sur ladite image.

17. Système selon l'une quelconque des revendications 10 à 16, comprenant un moyen pour détecter une diastole et/ou une systole dans ledit enregistrement vidéo, et un moyen pour mettre en place des marqueurs à ladite diastole et/ou systole dans l'enregistrement vidéo.

18. Système selon l'une quelconque des revendications 10 à 17, comprenant un moyen d'affichage réglable apte à représenter une région comprenant un coeur humain (S03), un moyen pour mettre en évidence une zone (A1, A2, A3) de la représentation correspondant audit au moins un enregistrement vidéo, un moyen pour afficher une liste d'enregistrements vidéo correspondant à la zone (S04) comprenant ledit au moins un enregistrement vidéo et un moyen de lecture vidéo pour lire ledit au moins un enregistrement vidéo (S05) quand un utilisateur sélectionne ledit au moins un enregistrement vidéo.

FIG.1

EP 2 824 636 B1

## FIG.2

## FIG.3

Frame —19

Resize —20

Smooth —21

Gradient calculation —22

Total variation calculation —23

# FIG.4

```
        ╭─────────────╮
        │    Video    │ ⌐ 24
        │  recording  │
        ╰─────────────╯
               │
               ▼
    ┌─────────────────────┐
    │ Total variation norm│ ⌐ 25
    │     calculation     │
    └─────────────────────┘
               │
               ▼
    ┌─────────────────────┐
    │ Total variation norm│ ⌐ 26
    │      smoothing      │
    └─────────────────────┘
               │
               ▼
    ┌─────────────────────┐
    │ Contrast agent area │ ⌐ 27
    │      detection      │
    └─────────────────────┘
```

FIG.5a

FIG.5b

FIG.5c

## FIG.6

## FIG.7

# FIG.8

# FIG.9

**S01**

| Studies Work list |
| --- |
| 1 Patient XXX, Age 111 |
| 2 Patient XXX, Age 111 |
| 3 Patient XXX, Age 111 |
| ... |

**S02**

| Patient exams list | |
| --- | --- |
| Date 1 Diagnostic | |
| Date 1 PCI, Ballon/Sten passing | Vessel Map Timeline Button |
| Date 1 Diagnostic | |
| Date 2 Follow-up | |

B1

S03

A2

A3

A1

Vessel map

**S04**

| LAD vessel therapy timeline |
| --- |
| 1 Date 1 : Diagnostic |
| 2 Date 1 : Sten/Ballon device positioned |
| 3 Date 1 : Diagnostic |
| 4 Date 2 : Follow-up  ▷ |

B2

Cardio vascular viewer

S05

# FIG.10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HU.** Visual pattern recognition by moment invariants. *IRE Trans Inf Theory,* 1962, 179-187

- **MERCIMEK ; GULEZ ; MUMCU.** Real Object recognition using moment invariants. *Sadhana,* 2005, vol. 30, 765-775